# EUROPÄISCHE PATENTSCHRIFT

(11) **EP 0 857 613 B1**
(45) Veröffentlichungstag und Bekanntmachung des Hinweises auf die Patenterteilung: **16.03.2005**
(21) Anmeldenummer: 98101018.4
(22) Anmeldetag: 22.01.1998
(51) Int. Cl.: B60R 1/12

(54) **Gehäuse, vorzugsweise Aussenrückblickspiegel für Fahrzeuge, insbesondere für Kraftfahrzeuge**
Housing, preferably exterior rear view mirror for vehicles, in particular motor vehicles
Boîtier, de préférence rétroviseur extérieur de véhicules, en particulier véhicules à moteur

(30) Priorität: 11.02.1997 DE 19705131
(43) Veröffentlichungstag der Anmeldung: 12.08.1998
(73) Patentinhaber: Reitter & Schefenacker GmbH & Co. KG, 73730 Esslingen (DE)
(72) Erfinder: Waldmann, Bernd, 72622 Nürtingen (DE)
(74) Vertreter: Kohl, Karl-Heinz, Dipl.-Ing.

(56) Entgegenhaltungen:
- US-A- 3 584 227
- US-A- 5 689 328

## Beschreibung

Die Erfindung betrifft ein Gehäuse, vorzugsweise einen Außenrückblickspiegel für Fahrzeuge, insbesondere für Kraftfahrzeuge, nach dem Oberbegriff des Anspruches 1.

Es ist bekannt, im Außenrückblickspiegel eines Kraftfahrzeuges eine optische Abtasteinrichtung unterzubringen, mit der beispielsweise berührungslos seitliche Fahrbahnbereiche mit nachgeschalteter Auswerteeinheit abgetastet werden können. Auch können solche Abtasteinrichtungen zur Hinderniserkennung, Abstandswarnung, Rückraumüberwachung und dergleichen vorgesehen sein. Die von der Abtasteinrichtung ausgesandten Strahlen treten durch ein Fenster im Gehäuse nach außen. Ebenso treten die Strahlen durch das Fenster nach innen zur Abtasteinrichtung. Es hat sich gezeigt, daß das Fenster beschlägt, wodurch die Funktion der Abtasteinrichtung beeinträchtigt wird und sie unter Umständen sogar ausfällt.

Der Erfindung liegt die Aufgabe zugrunde, das gattungsgemäße Gehäuse so auszubilden, daß eine sichere Funktion der optischen Abtasteinrichtung gewährleistet ist.

Diese Aufgabe wird beim gattungsgemäßen Gehäuse erfindungsgemäß mit den kennzeichnenden Merkmalen des Anspruches 1 gelöst.

Beim erfindungsgemäßen Gehäuse wird das Fenster durch einen hohlen, luftdichten Fensterkörper gebildet. Dadurch wird in einfacher Weise ein Beschlagen des Fensterkörpers verhindert, so daß der Durchtritt der Strahlen von und zur Abtasteinrichtung nicht beeinträchtigt wird. Auf diese Weise ist eine zuverlässige Funktion der Abtasteinrichtung gewährleistet, ohne daß aufwendige Einrichtungen erforderlich sind, um ein beschlagenes Fenster wieder frei zu machen.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: einen Querschnitt durch ein erfindungsgemäßes Gehäuse,
- Fig. 2: die Einzelheit X in Fig. 1 in vergrößerter Darstellung.

Das Gehäuse dient im dargestellten Ausführungsbeispiel zur Aufnahme einer Abtasteinrichtung, die vorzugsweise eine Infrarot-Abtasteinrichtung ist. Die Abtasteinrichtung kann zur Hinderniserkennung, Abstandswarnung, Rückraumüberwachung, Fahrbahnmarkierungserkennung, Umfeldüberwachung und dergleichen dienen. Das Gehäuse ist vorteilhaft der Spiegelkopf eines Außenrückblickspiegels eines Fahrzeuges, vorzugsweise eines Kraftfahrzeuges. Es ist selbstverständlich möglich, dieses Gehäuse zusätzlich zu einem Außenrückblickspiegel am Fahrzeug an einer geeigneten Stelle vorzusehen

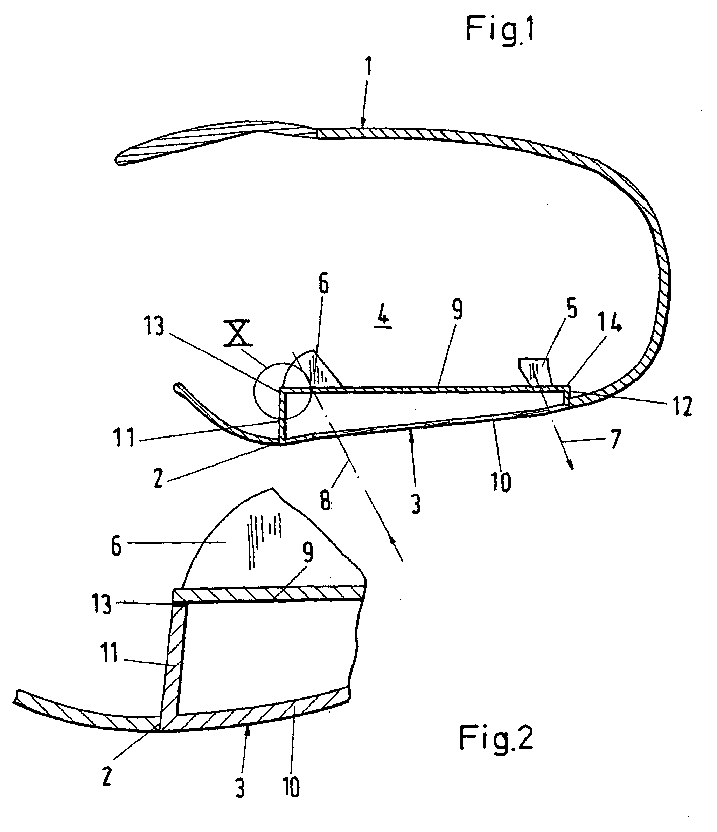

Das Gehäuse hat einen hohlen Aufnahmekörper 1, der im Falle eines Außenrückblickspiegels Teil des Spiegelkopfes ist, in dem eine Glasträgerplatte mit einem Spiegelglas in bekannter Weise verstellbar untergebracht ist. Der Aufnahmekörper 1 kann jede geeignete Form haben. Er ist an wenigstens einer Seite mit wenigstens einer Öffnung 2 versehen, in die ein Fensterkörper 3 eingesetzt ist. Im Aufnahmekörper 1 ist die Abtasteinrichtung 4 untergebracht, die in Fig. 1 durch einen Sender 5 und einen Empfänger 6 gekennzeichnet ist. Die vom Sender 5 ausgesandten Strahlen 7 treten durch den Fensterkörper 3 nach außen. Die zum Empfänger 6 gelangenden Strahlen 8 treten durch den Fensterkörper 3 in den Aufnahmekörper 1 ein. Vorteilhaft sind der Sender 5 und/oder der Empfänger 6 innerhalb des Aufnahmekörpers 1 an der innerhalb des Aufnahmekörpers 1 liegenden Innenwand 9 des Fensterkörpers 3 befestigt. Der Fensterkörper 3 besteht aus einem Material, das für die vom Sender 5 ausgehenden Strahlen 7 durchlässig ist.

Der Fensterkörper 3 ist als Hohlkörper ausgebildet, der so luftdicht abgeschlossen ist, daß Feuchtigkeit nicht in den Fensterkörper 3 gelangen kann. Dadurch ist auf einfachste Weise gewährleistet, daß die Außenwand 10 des Fensterkörpers 3 nicht beschlagen kann. Dadurch ist sichergestellt, daß die Funktion der Abtasteinrichtung 4 durch beschlagene Fenster nicht beeinträchtigt wird.

Der Fensterkörper 3 ist vorteilhaft so ausgebildet, daß die Außenwand 10 innerhalb der Wandung des Aufnahmekörpers 1 liegt bzw. im Bereich der Öffnung 2 eine stetige Fortsetzung der Wandung des Aufnahmekörpers 1 bildet. Der Fensterkörper 3 hat einstückig mit der Außenwand 10 ausgebildete Seitenwände 11, 12, die beispielsweise parallel zueinander liegen. An den freien Rändern 13, 14 der Seitenwände 11, 12 ist die Innenwand 9 befestigt, die eben oder gekrümmt ausgebildet ist. Die Innenwand 9 kann stoßend auf den Rändern 13, 14 durch Schweißen, Kleben und dergleichen befestigt sein. Die Verbindungsstelle ist so gestaltet, daß Luft und/oder Feuchtigkeit nicht nach innen in den Fensterkörper 3 gelangen kann.

Der Fensterkörper 3 selbst wird abgedichtet in die Öffnung 2 des Aufnahmekörpers 1 eingesetzt.

Da der Sender 5 und der Empfänger 6 unmittelbar an der Innenwand 9 des Fensterkörpers 3 befestigt sind, ist ein problemloser Austritt und Eintritt der Strahlen 7, 8 gewährleistet. Aufgrund des Fensterkörpers 3 sind aufwendige Zusatzeinrichtungen nicht erforderlich, um ein Beschlagen des Fensterkörpers und damit eine Beeinträchtigung der Funktionsfähigkeit der Abtasteinrichtung zu vermeiden. Der Sender 5 und der Empfänger 6 sind an eine (nicht dargestellte) Auswerteeinheit angeschlossen, die im Aufnahmekörper 1 oder im Fahrzeug untergebracht sein kann. Mit ihr werden die Signale ausgewertet. Sie können dann für unterschiedliche Warnund/oder Hilfsfunktionen eingesetzt werden, wie beispielsweise zur Erzeugung eines optischen und/oder akustischen Warnsignales, zur Lenkkorrektur, zur Geschwindigkeitsregelung und dergleichen.

## Patentansprüche

1. Gehäuse, vorzugsweise Außenrückblickspiegel gehäuse (1) für Fahrzeuge, insbesondere für Kraftfahrzeuge, in dem wenigstens eine optische Abtasteinrichtung untergebracht ist und das wenigstens ein Fenster (3) für den Ein- und/oder Austritt von Signalen zur bzw. von der Abtasteinrichtung aufweist,
**dadurch gekennzeichnet, daß** das Fenster ein hohler, luftdichter Fensterkörper (3) ist.

2. Gehäuse nach Anspruch 1,
**dadurch gekennzeichnet, daß** der Fensterkörper (3) abgedichtet in eine Öffnung (2) eines Aufnahmekörpers (1) des Gehäuses eingesetzt ist.

3. Gehäuse nach Anspruch 1 oder 2,
**dadurch gekennzeichnet, daß** der Fensterkörper (3) mit einer Außenwand (10) im Bereich der Öffnung (2) eine stetige Fortsetzung der Wand des Aufnahmekörpers (1) bildet.

4. Gehäuse nach einem der Ansprüche 1 bis 3,
**dadurch gekennzeichnet, daß** eine Innenwand (9) des Fensterkörpers (3) luftdicht mit dem übrigen Teil des Fensterkörpers (3) verbunden ist, wie durch Schweißen, Kleben und dergleichen.

5. Gehäuse nach einem der Ansprüche 1 bis 4,
**dadurch gekennzeichnet, daß** die Innenwand (9) des Fensterkörpers (3) eben oder gekrümmt ist.

6. Gehäuse nach einem der Ansprüche 1 bis 5,
**dadurch gekennzeichnet, daß** innerhalb des Aufnahmekörpers (1) an der Innenwand (9) des Fensterkörpers (3) ein Sender (5) und/oder ein Empfänger (6) der Abtasteinrichtung (4) angeordnet sind.

## Claims

1. Housing, preferably exterior rear view mirror housing (1) for vehicles, in particular for motor vehicles, in which at least one optical sensing device is accommodated and which has at least one window (3) for the inlet and/or outlet of signals to or from the sensing device, **characterized in that** the window is a hollow, airtight window body (3).

2. Housing according to Claim 1, **characterized in that** the window body (3) is inserted in a sealed manner into an opening (2) in a holding body (1) of the housing.

3. Housing according to Claim 1 or 2, **characterized in that** the window body (3) forms, with an outer wall (10) in the region of the opening (2), a continuous extension of the wall of the holding body (1).

4. Housing according to one of Claims 1 to 3, **characterized in that** an inner wall (9) of the window body (3) is connected in an airtight manner, such as by welding, bonding and the like, to the remaining part of the window body (3).

5. Housing according to one of Claims 1 to 4,
**characterized in that** the inner wall (9) of the window body (3) is flat or curved.

6. Housing according to one of Claims 1 to 5, **characterized in that** a transmitter (5) and/or a receiver (6) of the sensing device (4) is/are arranged within the holding body (1) on the inner wall (9) of the window body (3).

## Revendications

1. Boîtier, de préférence boîtier de rétroviseur extérieur (1) pour des véhicules, en particulier des véhicules automobiles, dans lequel est logé au moins un dispositif de palpage optique et qui présente au moins une fenêtre (3) pour l'entrée et/ou la sortie de signaux vers ou depuis le dispositif de palpage, **caractérisé en ce que** la fenêtre est un corps de fenêtre (3) creux et étanche à l'air.

2. Boîtier selon la revendication 1, **caractérisé en ce que** le corps de fenêtre (3) est mis en place avec étanchement dans une ouverture (2) d'un corps de logement (1) du boîtier.

3. Boîtier selon l'une ou l'autre des revendications 1 et 2, **caractérisé en ce que** le corps de fenêtre (3) forme par une paroi extérieure (10) dans la zone de l'ouverture (2) un prolongement continu de la paroi du corps de logement (1).

4. Boîtier selon l'une des revendications 1 à 3, **caractérisé en ce qu'**une paroi intérieure (9) du corps de fenêtre (3) est reliée de façon étanche à l'air à la partie restante du corps de fenêtre (3), par exemple par soudage, collage et similaire.

5. Boîtier selon l'un des revendications 1 à 4, **caractérisé en ce que** la paroi intérieure (9) du corps de fenêtre (3) est plane ou incurvée.

6. Boîtier selon l'une de revendications 1 à 5, **caractérisé en ce qu'**un émetteur (5) et/ou un récepteur (6) du dispositif de palpage (4) est/sont agencé(s) à l'intérieur du corps de logement (1) sur la paroi intérieure (9) du corps de fenêtre (3).
